# EUROPÄISCHE PATENTSCHRIFT

(11) **EP 3 755 451 B1**
(45) Veröffentlichungstag und Bekanntmachung des Hinweises auf die Patenterteilung: **20.07.2022**
(21) Anmeldenummer: 19706990.9
(22) Anmeldetag: 22.02.2019
(51) Int. Cl.: B01D 46/00, B01D 46/24, B01D 46/52, B01D 35/30, B01D 29/21

(54) **FILTERELEMENT UND FILTERSYSTEM**
FILTER ELEMENT AND FILTER SYSTEM
ÉLÉMENT FILTRANT ET SYSTÈME DE FILTRE

(30) Priorität: 23.02.2018 DE 102018001436
(43) Veröffentlichungstag der Anmeldung: 30.12.2020
(73) Patentinhaber: MANN+HUMMEL GmbH, 71636 Ludwigsburg (DE)
(72) Erfinder: NEEF, Pascal, 78647 Trossingen (DE)
(74) Vertreter: Mann + Hummel Intellectual Property
(86) Internationale Anmeldenummer: PCT/EP2019/054395
(87) Internationale Veröffentlichungsnummer: WO 2019/162421

(56) Entgegenhaltungen:
- WO-A1-2017/102009
- DE-A1-102014 016 908
- DE-A1-102016 010 101
- JP-U- H01 163 513
- US-A1- 2010 263 338
- US-A1- 2012 181 224

## Beschreibung

### Technisches Gebiet

Die Erfindung betrifft ein Filterelement und ein Filtersystem, insbesondere für die Ansaugluft einer Brennkraftmaschine, insbesondere eines Kraftfahrzeugs.

### Stand der Technik

Aus der DE 102014016908 ist ein Rundfilterelement bekannt, bei dem die Stirnkantenfläche des Rundfilterelements gegenüber der Längsachse des Rundfilterelements in einem halbkreisförmigen Bereich der Stirnkantenfläche unter Verminderung der Filterfläche abgeschrägt ist. Der Filterbalg ist auf einem entsprechend angepassten abgeschrägten Stützrohr angeordnet. Durch die Abschrägung der Stirnkantenfläche am Element ist eine eindeutige Orientierung des Filterbalgs im Filtergehäuse gegeben.

### Offenbarung der Erfindung

Eine Aufgabe der Erfindung ist es, ein Filterelement anzugeben, das verwechslungssicher in ein Filtergehäuse eingebaut werden kann und das eine möglichst große Filterfläche zur Verfügung stellt.

Eine weitere Aufgabe der Erfindung ist es, ein Filtersystem mit einem solchen Filterelement anzugeben.

Die vorgenannten Aufgaben werden nach einem Aspekt der Erfindung gelöst mit einem Filterelement mit einem runden Filterbalg aus einem Filtermedium mit einem kreisrunden oder ovalen Querschnitt, das in dem Filterbalg entlang von Faltkanten in Falten gelegt ist, die sich jeweils zwischen gegenüberliegenden Stirnkanten des Filterbalges erstrecken, wobei der Faltenbalg in sich geschlossen um eine Längsachse angeordnet ist und einen Hohlraum einschließt und an seinen beiden Stirnseiten jeweils mit einer Endscheibe abgedichtet ist, wobei der Filterbalg in wenigstens einer seiner Stirnkantenflächen einen Beschnitt so aufweist, dass wenigstens ein Bereich von Falten mit verkürzter Faltenlänge gebildet ist, deren Faltenlänge am äußeren Umfang und am inneren Umfang des Filterbalgs im Wesentlichen gleich ist.

Die Aufgabe wird nach einem weiteren Aspekt der Erfindung gelöst durch ein Filtersystem mit einem Gehäuse mit Einlass und Auslass für ein Fluid und mit einem ersten und einem zweiten Gehäuseteil, wobei in dem Gehäuse ein Filterelement angeordnet ist, mit einem in sich geschlossenen und um eine Längsachse angeordneten Filterbalg, der an seinen beiden Stirnseiten jeweils mit einer Endscheibe abgedichtet ist, wobei der Filterbalg in wenigstens einer seiner Stirnkantenflächen einen Beschnitt so aufweist, dass wenigstens ein Bereich von Falten mit verkürzter Faltenlänge gebildet ist, deren Faltenlänge wenigstens bereichsweise am äußeren Umfang und am inneren Umfang des Filterbalgs im Wesentlichen gleich ist, und wobei wenigstens eines der Gehäuseteile wenigstens einen Bereich aufweist, der korrespondierend zu dem Beschnitt des Filterelements ausgebildet ist.

Günstige Ausgestaltungen und Vorteile der Erfindung ergeben sich aus den weiteren Ansprüchen, der Beschreibung und der Zeichnung.

Es wird ein Filterelement vorgeschlagen, mit einem Filterbalg aus einem Filtermedium, das in dem Filterbalg entlang von Faltkanten, insbesondere zickzackförmig, in Falten gelegt ist, die sich jeweils zwischen gegenüberliegenden Stirnkanten des Filterbalges erstrecken. Der Faltenbalg ist in sich geschlossen um eine Längsachse angeordnet und schließt einen Hohlraum ein und ist an seinen beiden Stirnseiten jeweils mit einer Endscheibe abgedichtet. Der Filterbalg weist in wenigstens einer seiner Stirnkantenflächen einen Beschnitt so auf, dass wenigstens ein Bereich von Falten mit verkürzter Faltenlänge gebildet ist, deren Faltenlänge wenigstens bereichsweise am äußeren Umfang und am inneren Umfang des Filterbalgs im Wesentlichen gleich ist.

Ein Beschnitt kann auf einer Stirnseite des Filterbalgs oder auch auf beiden Seiten vorgesehen sein. Dass die Faltenlänge im Bereich verkürzter Faltenlänge außen und innen gleich ist, bedeutet, dass ein Winkel zwischen der Längsachse des Filterelements und den Faltenkanten im Bereich verkürzter Faltenlänge im Wesentlichen ein rechter Winkel ist. Optional kann innerhalb des Bereichs ein Teil der Falten schräg zur Längsachse angeordnete Stirnkanten aufweisen. Beispielsweise können die Stirnkanten innerhalb des Bereichs an dessen Rändern senkrecht zur Längsachse orientiert sein und in der Mitte abgeschrägt sein.

Vorteilhaft können ein oder mehrere Bereiche mit Falten verkürzter Faltenlänge vorgesehen sein, so dass nur ein kleiner Teil der Filterfläche durch die geringere Längserstreckung des Filterbalgs dort entfällt. Besonders günstig kann das Mittelrohr unverändert bleiben, so dass das Filterelement auf seiner ganzen Längserstreckung gestützt sein kann. Vorzugsweise weisen weniger als 50 % der Stirnkantenflächen des Filterbalgs Falten mit verkürzter Faltenlänge auf.

Der Filterbalg kann vorzugsweise mittels Laserbeschnitt vor oder nach dem Aufstellen der Falten beschnitten werden.

Die Stirnfalten im Sinne der Erfindung sind die beiden äußeren Falten, an gegenüberliegenden Stirnseiten des Filterbalges. Die Stirnränder sind die beiden freien Ränder des Filtermediums, welche entlang der Stirnfalten verlaufen und diese an den Stirnseiten des Filterbalges begrenzen. Die Stirnkanten des Filterbalges sind die beiden anderen freien Ränder des Filterbalges, die sich zwischen den Stirnrändern erstrecken und entsprechend der Faltung des Filterbalges verlaufen. Die Faltkanten sind die Kanten, entlang denen das Filtermedium gefaltet ist. Bei einem vom Markt her bekannten zickzackförmig gefalteten, etwa quaderförmigen Filterbalg sind die Stirnränder und die Faltkanten in der Regel gerade und verlaufen parallel zueinander. Die Stirnkanten verlaufen von der Seite auf den Filterbalg betrachtet zickzackförmig und senkrecht zu den Stirnrändern und den Faltkanten. Vor dem Falten des Filtermediums verlaufen die Stirnkanten des später eine etwa quaderförmige gedachte Umhüllende aufweisenden Filterbalges gerade und parallel zueinander. Die gedachte Umhüllende wird durch die Stirnkanten, die auf einer Reinfluidseite des Filterbalges benachbarten Faltkanten bzw. Stirnränder und die auf einer Rohfluidseite benachbarten Faltkanten bzw. Stirnränder aufgespannt.

Bei Filterbälgen von Rundfilterelementen sind die Filtermedien geschlossen, das heißt, ihre Stirnfalten sind miteinander verbunden. Filterbälge von Rundfilterelementen können dabei kreisrunde Querschnitte, aber auch andere geschlossene Querschnittsformen, etwa elliptische Querschnitte, aufweisen.

Vorteilhaft kann die geschlossene Endscheibe Abstützrippen aufweisen, mit denen das Filterelement gegen das Gehäuse abgestützt werden kann. Diese können auf einer ebenen Stirnfläche der Endscheibe vorgesehen sein. Optional kann eine Abstützung so erfolgen, dass Abstützelemente in den Aussparungen vorgesehen sind. Dies erlaubt eine Verkürzung der Bauhöhe des Filterelements. Gegebenenfalls können in einem korrespondierenden Gehäuseteil entsprechende Gegenelemente für die Abstützelemente in den Aussparungen des Filterelements angeordnet sein.

Gemäß einer günstigen Ausgestaltung können im Bereich von Falten mit verkürzter Faltenlänge die Stirnkanten der Falten in einer ebenen Fläche liegen. Vorzugsweise können die Stirnkanten der Falten mit verkürzter Faltenlänge in einer von der Stirnkantenfläche ausgehenden Ausnehmung mit ebenem Boden im Filterbalg liegen. Diese Geometrie ist einfach zu fertigen.

Gemäß einer günstigen Ausgestaltung können im Bereich von Falten mit verkürzter Faltenlänge die Stirnkanten der Falten in einer gekrümmten Fläche liegen. Vorzugsweise können die Stirnkanten der Falten mit verkürzter Faltenlänge in einer von der Stirnkantenfläche ausgehenden konkaven Ausnehmung im Filterbalg liegen. Als konkav wird eine Vertiefung oder Ausnehmung bezeichnet, die ausgehend von der üblicherweise ebenen Stirnfläche eines Filterbalgs in den Filterbalg hineinragt, so dass die durch den zickzackförmigen Verlauf der Stirnkanten gebildete Stirnfläche lokal zurückversetzt ist. Die Ausnehmung kann abgerundet oder eckig sein, beispielsweis halbkreisförmig, mehreckig, viereckig, trapezförmig oder dreieckig. Die Ausnehmung kann beispielsweise eine Form haben, die eine Assoziation eines herausgebissenen Stücks eines Filterbalgs erzeugt, also eine ausbissartige Form haben. Die Geometrie der einen oder mehreren Ausnehmungen kann nach Bedarf gewählt werden. Insbesondere Laserschneiden erlaubt große Freiheitsgrade beim Ausschneiden der Ausnehmungen in den Filterbälgen.

Gemäß einer günstigen Ausgestaltung können im Filterbalg alternierend Ausnehmungen mit Falten mit verkürzter Faltenlänge und Falten mit unverkürzter Faltenlänge aufeinander folgen. Dies erlaubt bei Einbau in ein Filtergehäuse eines Filtersystems einen lageorientierten und verwechslungssicheren Einbau für eine Poka Yoke-Montage. Ein Gehäusedeckel kann entsprechend korrespondierend zu den Ausnehmungen ausgebildet sein. Dies ermöglicht eine bauraumgünstige Anordnung von Verschlüssen zwischen Gehäuseteilen gerade bei beengtem Bauraum, was im Automobilbereich häufig der Fall ist.

Gemäß einer günstigen Ausgestaltung kann im Filterbalg eine einzige Ausnehmung mit Falten mit verkürzter Faltenlänge innerhalb des Mediums angeordnet sein. Die Ausgestaltung des Filterbalgs kann nach Bedarf angepasst werden.

Gemäß einer günstigen Ausgestaltung kann der Filterbalg einen ringförmigen Querschnitt aufweisen. Alternativ kann der Filterbalg einen ovalen Querschnitt oder einen anderen Querschnitt aufweisen.

Nach einem weiteren Aspekt der Erfindung wird ein Filtersystem vorgeschlagen, insbesondere für ein erfindungsgemäßes Filterelement, mit einem Gehäuse mit einem Einlass und einem Auslass für ein Fluid, insbesondere einer Brennkraftmaschine, insbesondere eines Kraftfahrzeugs, und mit einem ersten und einem zweiten Gehäuseteil, wobei in dem Gehäuse ein Filterelement angeordnet ist, mit einem Filterbalg aus einem Filtermedium, das in dem Filterbalg entlang von Faltkanten, insbesondere zickzackförmig, in Falten gelegt ist, die sich jeweils zwischen gegenüberliegenden Stirnkanten des Filterbalges erstrecken. Der Faltenbalg ist in sich geschlossen um eine Längsachse angeordnet und schließt einen Hohlraum ein und ist an seinen beiden Stirnseiten jeweils mit einer Endscheibe abgedichtet. Der Filterbalg weist in wenigstens einer seiner Stirnkantenflächen einen Beschnitt so auf, dass wenigstens ein Bereich von Falten mit verkürzter Faltenlänge gebildet ist, deren Faltenlänge am äußeren Umfang und am inneren Umfang des Filterbalgs im Wesentlichen gleich ist. Wenigstens eines der Gehäuseteile weist wenigstens einen Bereich auf, der eine korrespondierende Vertiefung zu dem Beschnitt des Filterelements aufweist.

Durch die korrespondierende Ausgestaltung beispielsweise des Gehäusedeckels, der beispielsweise über der Stirnseite des Filterelements mit Beschnitt angeordnet sein kann, können im Gehäusedeckel Aussparungen ausgestaltet sein, die auf dessen Innenseite Ausbuchtungen bilden, welche in die Aussparungen des Filterelements eingreifen können. Filterelement und Gehäusedeckel können relativ zueinander lagerichtig positioniert werden. Ferner können die Aussparungen dazu dienen, Verschlusselemente aufzunehmen, so dass diese auch bei engem Bauraum bequem zu bedienen sind. Außerdem tragen die Verschlusselemente im geschlossenen Zustand des Filtergehäuses vorteilhaft nicht oder kaum über eine Umhüllende des Filtergehäuses hinaus zusätzlich auf. Vorteilhaft ist die Endscheibe an die Struktur an der Stirnseite des Filterelements angepasst. Besonders günstig gelingt dies mit einem geschäumten Polymer, insbesondere einem Polyurethan als Endscheibenmaterial.

Gemäß einer günstigen Ausgestaltung kann das Filterelement um ein Stützrohr angeordnet sein, welches eine entlang seines Umfangs konstante axiale Erstreckung aufweist. Insbesondere kann das Stützrohr im Bereich mit verkürzter Faltenlänge unverkürzt ausgebildet sein. Vorteilhaft kann eine vollständige Abstützung eines Zentralbereichs des Filterelements vollständig durch das durchgehende Stützrohr gewährleistet werden.

Gemäß einer günstigen Ausgestaltung kann der Beschnitt an einem Ende des Filterelements mit geschlossener Endscheibe angeordnet sein. Alternativ oder zusätzlich kann der Beschnitt an einem Ende des Filterelements mit offener Endscheibe angeordnet sein. Eine bedarfsgerechte Gestaltungsfreiheit ist möglich.

Die offene Endscheibe weist eine koaxiale Strömungsöffnung auf, die bevorzugt als Abströmöffnung verwendet wird. Weiter bevorzugt weist die offene Endscheibe im Bereich der Strömungsöffnung eine Dichtung, bevorzugt eine Radialdichtung und alternativ eine Axialdichtung auf, zur dichten Verbindung mit einem gehäuseseitigen Auslass. Die Dichtung kann bevorzugt einstückig mit der Endscheibe ausgebildet sein, beispielsweise gegossen aus Polyurethan.

Gemäß einer günstigen Ausgestaltung kann im Gehäuseteil, welchem die beschnittene Stirnseite des Filterelements zugewendet ist, wenigstens eine Ausbuchtung an einer Innenseite des Gehäuseteils in wenigstens eine Ausnehmung am Filterelement eingreifen. Dies erlaubt eine einfache lageorientierte Positionierung zwischen Gehäuseteil und Filterelement. Das Gehäuseteil kann vorzugsweise der Gehäusedeckel und/oder der Gehäuseboden sein.

Gemäß einer günstigen Ausgestaltung kann in einer außenseitigen Vertiefung des Gehäuseteils, welche eine entsprechende innenseitige Ausbuchtung bildet, ein Verschlusselement, insbesondere ein Schnapphaken oder Drahtbügelverschluss, angeordnet sein. Insbesondere kann das Verschlusselement im geschlossenen Zustand des Gehäuses im Wesentlichen in die Vertiefung eintauchen. Vorteilhaft kann ein schwenkbares Element des Verschlusselements in der Vertiefung untergebracht sein, wo dieses platzsparend und leicht zugänglich angeordnet ist.

Gemäß einer günstigen Ausgestaltung kann eine Trennebene zwischen erstem und zweitem Gehäuseteil im Wesentlichen auf der axialen Höhe von Ausnehmungen im Filterelement angeordnet sein. Dies erlaubt eine leichte Zugänglichkeit des Gehäusedeckels bei beengtem Bauraum.

Das Filtersystem ist beispielsweise ein Luftfiltersystem, insbesondere ein Luftfiltersystem für eine Brennkraftmaschine, bevorzugt ein Luftfiltersystem für eine Brennkraftmaschine eines Kraftfahrzeugs. Alternativ ist das Filtersystem ein Flüssigkeitsfiltersystem für flüssige Fluide, etwa Öl oder Kraftstoff, insbesondere ein Flüssigkeitsfiltersystem für eine Brennkraftmaschine, bevorzugt ein Flüssigkeitsfiltersystem für eine Brennkraftmaschine eines Kraftfahrzeugs.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine isometrische Ansicht eines Filtersystems mit einem Filterelement nach einem Ausführungsbeispiel der Erfindung;
- Fig. 2: das Filtersystem aus Fig. 1 in Explosionsdarstellung;
- Fig. 3: das Filtersystem aus Fig. 1 in Draufsicht;
- Fig. 4: das Filtersystem in Fig. 1 als Längsschnitt entlang der Schnittebene IV-IV in Fig. 3;
- Fig. 5: einen Ausschnitt aus dem Filtersystem aus Fig. 1 in vergrößerter Darstellung entsprechend dem Detail V in Fig. 4;
- Fig. 6: das Filterelement aus Fig. 1 in isometrischer Ansicht;
- Fig. 7: eine isometrische Ansicht eines Filterbalgs nach einem Ausführungsbeispiel der Erfindung;
- Fig. 8: einen vergrößerten Ausschnitt des Filterbalgs aus Fig. 7;
- Fig. 9: den Filterbalg aus Fig. 7 in abgewickelter Darstellung;
- Fig. 10: eine isometrische Ansicht eines Filterbalgs nach einem weiteren Ausführungsbeispiel der Erfindung;
- Fig. 11: einen vergrößerten Ausschnitt aus einem Filterbalg aus Fig. 10;
- Fig. 12: den Filterbalg aus Fig. 10 in abgewickelter Darstellung;
- Fig. 13: eine isometrische Ansicht eines Filterbalgs nach einem weiteren Ausführungsbeispiel der Erfindung mit ovalem Querschnitt und einer Ausnehmung in einem Seitenbereich mit geringer Krümmung;
- Fig. 14: eine Seitenansicht des Filterbalgs aus Fig. 13;
- Fig. 15: eine isometrische Ansicht eines Filterbalgs nach einem weiteren Ausführungsbeispiel der Erfindung mit ovalem Querschnitt und einer Ausnehmung in einem Seitenbereich mit starker Krümmung;
- Fig. 16: eine Seitenansicht des Filterelements aus Fig. 15 mit ovalem Filterbalg.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

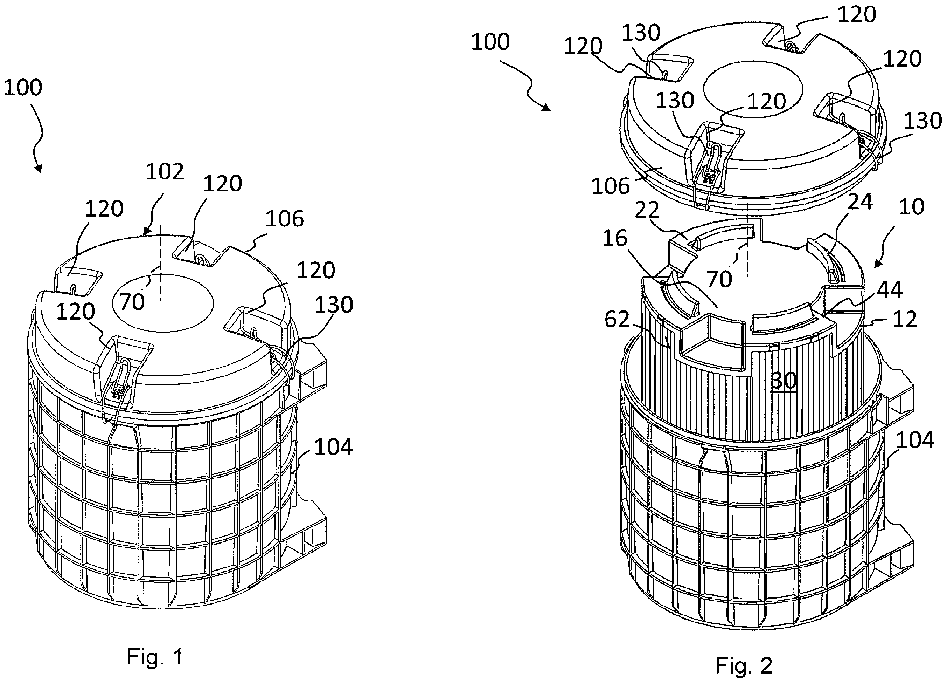

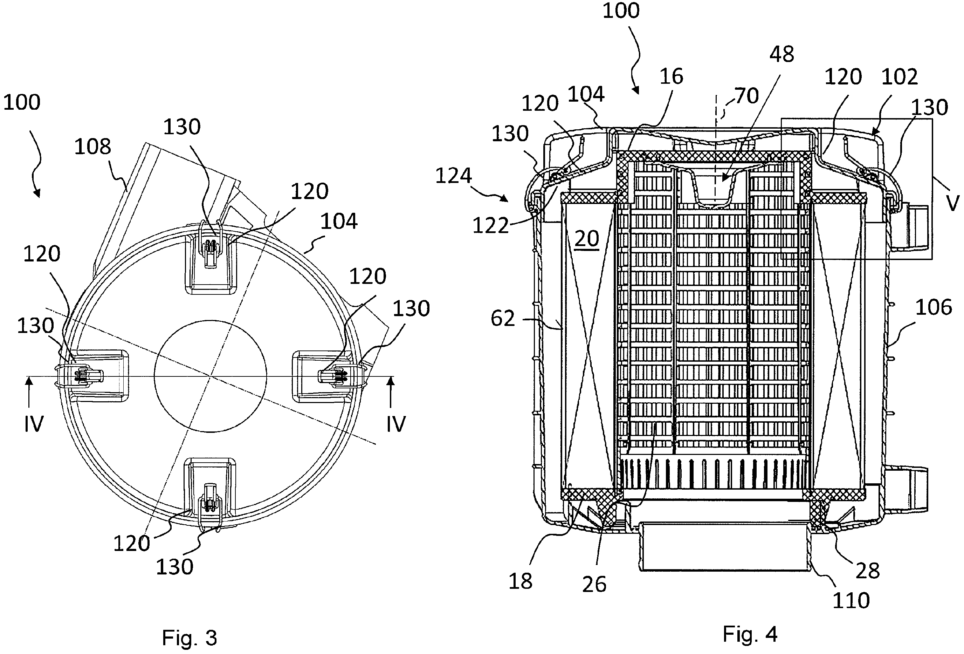

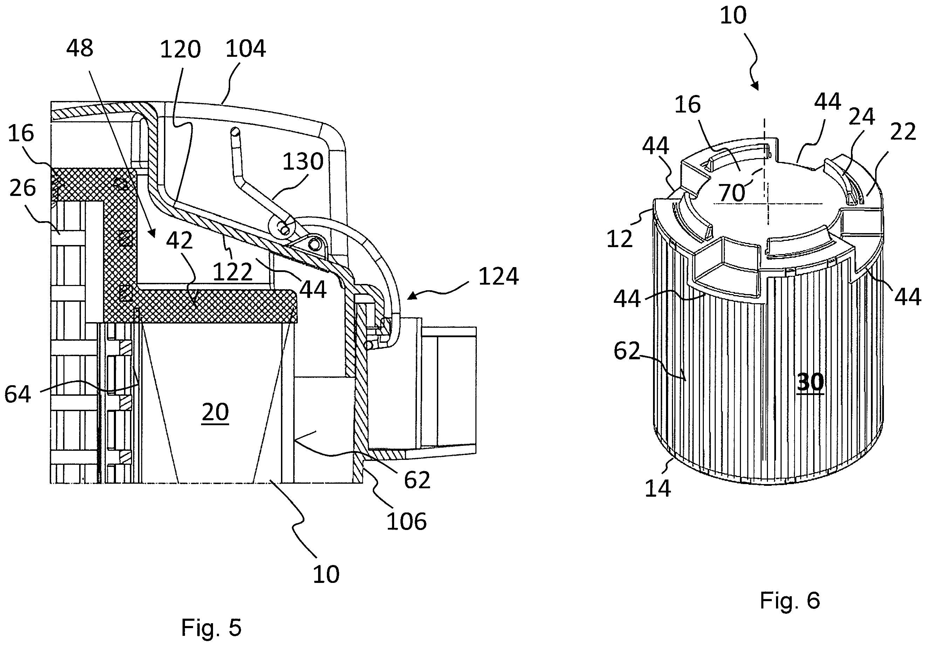

Die Figuren 1 bis 6 zeigen verschiedene Ansichten eines Filtersystems 100 mit einem Filterelement 10 nach einem Ausführungsbeispiel der Erfindung. Dabei zeigen Figur 1 eine isometrische Ansicht des Filtersystems 100, Figur 2 das Filtersystem 100 in Explosionsdarstellung, Figur 3 das Filtersystem 100 in Draufsicht, Figur 4 das Filtersystem 100 als Längsschnitt, Figur 5 einen Ausschnitt aus dem Filtersystem 100 in vergrößerter Darstellung und Figur 6 eine isometrische Darstellung des Filterelements 10.

Das Filtersystem 100 umfasst ein Gehäuse 102, in dem ein zylindrisches Filterelement 10 angeordnet ist. Das Gehäuse 102 umfasst ein erstes Gehäuseteil 104, beispielsweise einen Gehäusedeckel, und ein zweites Gehäuseteil 106, beispielweise einen Gehäusetopf. Am zweiten Gehäuseteil 106 ist ein beispielsweise tangential angeordneter Einlass 108 (Figur 3) und ein beispielsweise konzentrisch angeordneter Auslass 110 für ein Fluid angeordnet. In diesem Ausführungseispiel erfolgt die Strömung des Fluids durch das Filterelement 10 in radialer Richtung von einem äußeren Umfang 62, entsprechend der Anströmseite 62 zu einem inneren Umfang 64, entsprechend der Abströmseite.

Das in dem Gehäuse 102 angeordnete Filterelement 10 besteht aus einem Filterbalg 30 aus einem Filtermedium 20, das in dem Filterbalg 30 entlang von Faltkanten, insbesondere zickzackförmig, in Falten gelegt ist. Der Faltenbalg 30 ist in sich geschlossen um eine Längsachse 70 angeordnet und umgibt ein Stützrohr 26. Die beiden Stirnseiten 12, 14 sind jeweils mit einer Endscheibe 16, 18 abgedichtet (Figur 4). Die dem ersten Gehäuseteil 104 zugewandte Endscheibe 16 an der Stirnseite 12 ist geschlossen ausgebildet und ist auf der dem konzentrischen Auslass 110 entfernten Seite des Gehäuses 102 angeordnet.

Eine Trennebene 124 zwischen erstem und zweitem Gehäuseteil 104, 106 ist im Wesentlichen auf der axialen Höhe der Endscheibe 16 des Filterelements 10 angeordnet, welches an seiner Stirnseite 12 Bereiche 48 mit Ausnehmungen 44 im Filterbalg 30 aufweist. Verschlusselemente 130, mit denen das erste Gehäuseteil 104 mit dem zweiten Gehäuseteil 106 verbunden werden kann, sind dann für einen Bediener leicht erreichbar.

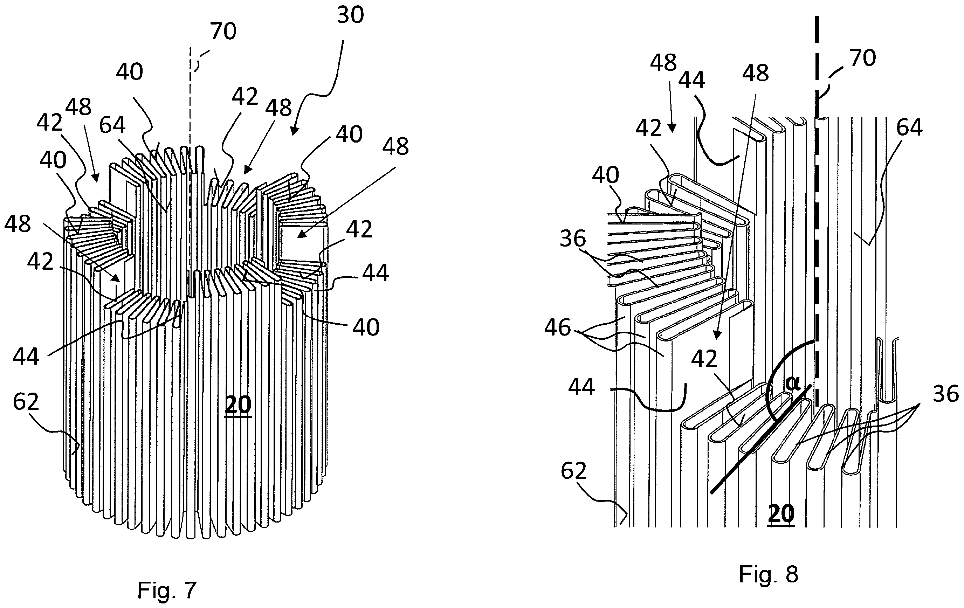

Die Ausnehmungen 44 im Filterbalg 30 des Filterelements 10 bilden einen Rückversatz der Stirnkanten 36 (Figuren 7, 8) der Falten 46 im Filterbalg 30 in Richtung der Längsachse 70. Das Stützrohr 26 erstreckt sich innerhalb des Filterbalgs 30 über dessen gesamte axiale Erstreckung und ist an den Stirnseiten 12, 14 in die Endscheiben 16, 18 eingebettet.

Die Ausnehmungen 44 sind durch die Endscheibe 16 formkomplementär nachgebildet, die vorzugsweise aus PUR-Schaum besteht. In diesem Ausführungsbeispiel liegen die Stirnkanten der Falten 46 des Filterbalgs 30 in den Ausnehmungen 44 in einer ebenen Fläche 42. An der Stirnfläche 22 der Endscheibe 16 sind wie auch an der gegenüberliegenden Endscheibe 18 Abstützrippen 24, 28 angeordnet, mit denen das Filterelement 10 zwischen den beiden Gehäuseteilen 104, 106 in üblicher Weise axial eingespannt werden kann. Beispielsweise sind vier äquidistante Ausnehmungen 44 am Filterelement 10 angeordnet.

Optional kann in einem zeichnerisch nicht dargestellten Ausführungsbeispiel vorgesehen sein, dass Abstützelemente im Bereich der Aussparungen 44 auf der Endscheibe 16 angeordnet sind. Dazu kann zusätzlich an der Ausbuchtung am entsprechenden Gehäuseteil 104 eine Abstützfläche angeordnet sein.

Entsprechend der Anordnung der Ausnehmungen 44 im Filterelement 10 weist das erste Gehäuseteil 104 von außen gesehen korrespondierende Vertiefungen 120 auf. Von der Innenseite des Gehäuseteils 104 gesehen bilden die Vertiefungen 120 Aus-buchtungen 122, die in die Ausnehmungen 44 eingreifen. Dabei kann ein Freiraum zwischen den Ausbuchtungen 122 im ersten Gehäuseteil und den Ausnehmungen 44 im Filterelement 10 bestehen bleiben.

In den außenseitigen Vertiefungen 120 des ersten Gehäuseteils 104 ist jeweils ein Verschlusselement 130 angeordnet, das insbesondere als Drahtbügelverschluss ausgebildet sein kann. Der bewegliche Teil des Verschlusselements 130, hier der schwenkbare Bügel, taucht im geschlossenen Zustand des Gehäuses 102 platzsparend in die Vertiefung 120 ein, während der Rastbügel an einem nicht näher bezeichneten Gegenelement des zweiten Gehäuseteils fixiert ist.

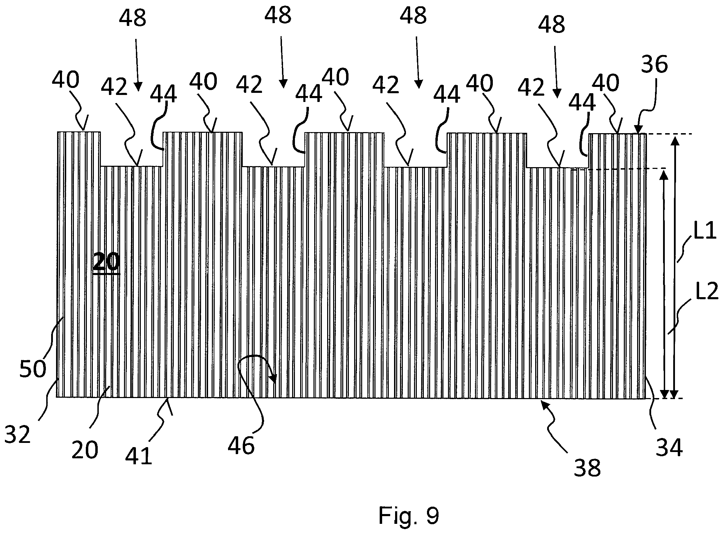

Die Figuren 7 bis 9 zeigen verschiedene Ansichten eines Filterbalgs 30 nach einer Ausführungsform der Erfindung. Dabei zeigen Figur 7 eine isometrische Ansicht des Filterbalgs 30, Figur 8 einen vergrößerten Ausschnitt des Filterbalgs 30 und Figur 9 den Filterbalg 30 in abgewickelter Darstellung.

Der Filterbalg 30 ist aus einem Filtermedium 20 gebildet, das in Falten 46 gelegt ist, deren Faltkanten 50 sich zwischen Stirnkanten 36 und 38 erstrecken. In abgewickelter Form weist der Filterbalg 30 zu beiden Seiten Stirnfalten 32, 34 auf, die miteinander verbunden werden, um den Filterbalg 30 mit geschlossenem Querschnitt als Rundelement zu bilden. Die Falten 46 zwischen den Stirnkantenflächen 40, 41 weisen eine Faltenlänge L1 auf. Es sind der Übersichtlichkeit wegen nur einige der Faltkanten 50, Stirnkanten 36, 38 und Falten 46 mit Bezugszeichen beziffert.

In diesem Ausführungsbeispiel der Erfindung weist der Filterbalg 30 an einer Stirnseite einen Beschnitt so auf, dass vier äquidistante Bereiche 48 gebildet sind, bei denen Falten 46 eine verkürzte Faltenlänge L2 aufweisen, wobei die Faltenlänge L2 auf beiden Seiten des Filtermediums 20 entsprechend der Anströmfläche (äußerer Umfang 62) und der Abströmfläche (innerer Umfang 64) gleich sind oder zumindest im Wesentlichen gleich sind.

Die Bereiche 48 weisen rechteckige Ausnehmungen 44 auf. Der Beschnitt des Filterbalgs 30 ist so ausgeführt, dass die Stirnkanten 36 der Falten 46 in jedem Bereich 48 senkrecht zur Längsachse 70 des Filterbalgs 30 orientiert sind, d. h., dass der Winkel α zwischen Längsachse 70 und den Stirnkanten 36 α = 90° beträgt. Die Stirnkanten 36 im Bereich 48 enden in einer Fläche 42, die eben ist und senkrecht zur Längsachse 70 orientiert ist.

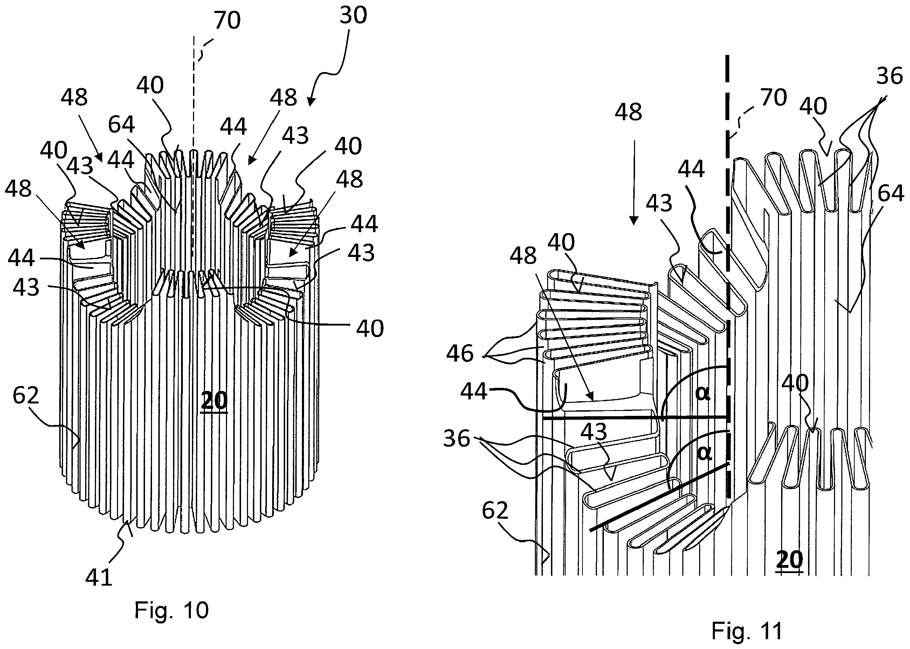

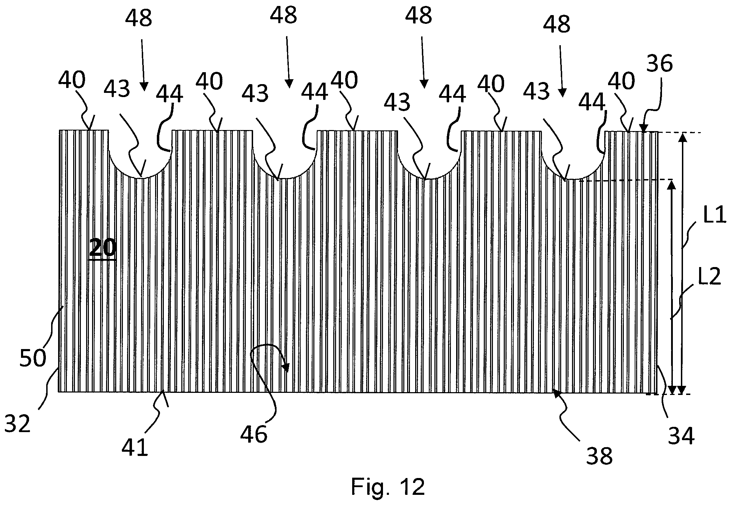

Die Figuren 10 bis 12 zeigen verschiedene Ansichten eines Filterbalgs 30 nach einer weiteren Ausführungsform der Erfindung. Dabei zeigen Figur 10 eine isometrische Ansicht des Filterbalgs 30, Figur 11 einen vergrößerten Ausschnitt des Filterbalgs 30 und Figur 12 den Filterbalg 30 in abgewickelter Darstellung.

Der Aufbau des Filterbalgs 30 entspricht dem im Ausführungsbeispiel der Figuren 7 bis 9, auf deren Beschreibung zur Vermeidung unnötiger Wiederholungen verwiesen wird.

Die vier äquidistanten Bereiche 48 weisen konkav ausgebildete Ausnehmungen 44 auf, bei denen die Stirnkanten 36 im Bereich 48 in einer gekrümmten Fläche 43 enden, die ein Zylinderabschnitt ist, deren Symmetrieachse senkrecht auf der Längsachse 70 steht. Der Beschnitt des Filterbalgs 30 ist so ausgeführt, dass Stirnkanten 36 der Falten 46 im Bereich 48 senkrecht zur Längsachse 70 des Filterbalgs 30 orientiert sind, d. h., dass der Winkel α zwischen Längsachse 70 und den Stirnkanten 36 α = 90° beträgt. Die Länge der Falten 46 in den Bereichen 48 variiert wegen der Krümmung der Fläche 43 mit einer minimalen Faltenlänge L2 im Minimum der Aussparungen 44.

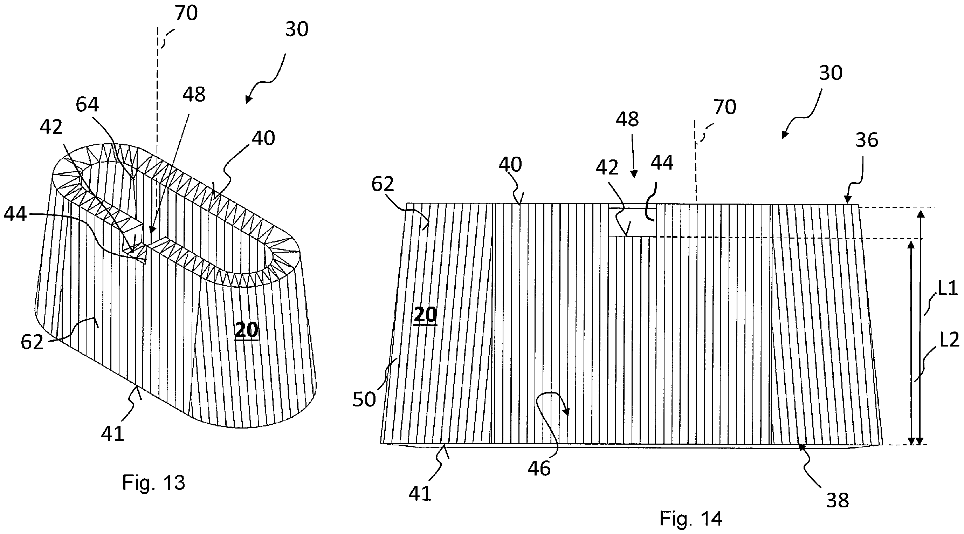

Die Figuren 13 und 14 zeigen Ansichten eines Filterbalgs 30 nach einem weiteren Ausführungsbeispiel der Erfindung. Figur 13 zeigt eine isometrische Ansicht und Figur 14 zeigt eine Seitenansicht des Filterbalgs 30.

Der Filterbalg 30 weist einen ovalen Querschnitt auf, wobei eine rechteckige Ausnehmung 44 in einer Flanke des Filterbalgs 30 mit geringer Krümmung angeordnet ist. Der Querschnitt ist an einer Stirnseite des Filterbalgs 30 größer als an der gegenüberliegenden Stirnseite. Innerhalb der Ausnehmung 44 weisen die Falten 46 eine verkürzte Faltenlänge L2 auf. Die Stirnkanten 36 der Falten 46 liegen in einer ebenen Fläche 42, wobei die Stirnkanten 36 in der Fläche 42 und die Fläche 42 selbst senkrecht zur Längsachse 70 orientiert sind.

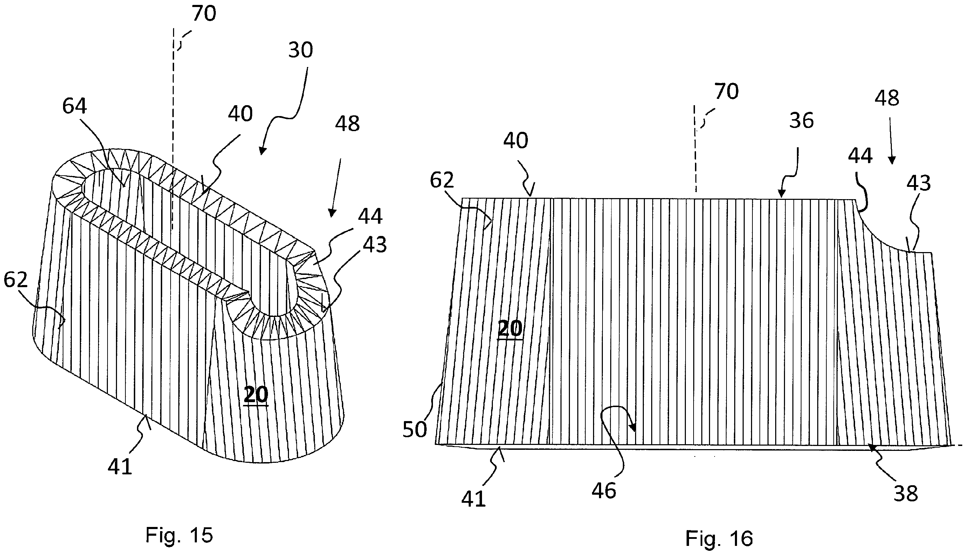

Die Figuren 15 und 16 zeigen Ansichten eines Filterbalgs 30 nach einem weiteren Ausführungsbeispiel der Erfindung. Figur 15 zeigt eine isometrische Ansicht und Figur 16 eine Seitenansicht des Filterbalgs 30.

Der Filterbalg 30 weist einen ovalen Querschnitt auf, wobei eine konkave Ausnehmung 44 in einer Flanke des Filterbalgs 30 mit starker Krümmung angeordnet ist. Der Querschnitt ist an einer Stirnseite des Filterbalgs 30 größer als an der gegenüberliegenden Stirnseite. Innerhalb der Ausnehmung 44 weisen die Falten 46 eine verkürzte Faltenlänge auf, die ausgehend von der Stirnkantenfläche 40 bis zu einem Minimalwert in der Mitte der Ausnehmung 44 absinkt. Die Stirnkanten 36 der Falten 46 liegHouben-Weylen in einer gekrümmten Fläche 43, wobei die Stirnkanten 36 in der gekrümmten Fläche 43 senkrecht zur Längsachse 70 orientiert sind.

In allen Ausführungsbeispielen kann optional vorgesehen sein, dass ein Segment von Stirnkanten 36 innerhalb eines oder mehrerer Bereiche 48 einen Winkel α ≠ 90° gegenüber der Längsachse 70 aufweist (nicht dargestellt).

## Patentansprüche

1. Filterelement (10) mit einem runden Filterbalg (30) aus einem Filtermedium (20), das in dem Filterbalg (30) entlang von Faltkanten (50), insbesondere zickzackförmig, in Falten (46) gelegt ist, die sich jeweils zwischen gegenüberliegenden Stirnkanten (36, 38) des Filterbalges (30) erstrecken,
wobei der Faltenbalg (30) in sich geschlossen um eine Längsachse (70) angeordnet ist und einen Hohlraum einschließt und an seinen beiden Stirnseiten (12, 14) jeweils mit einer Endscheibe (16, 18) abgedichtet ist,
wobei der Filterbalg (30) in wenigstens einer seiner Stirnkantenflächen (40, 41) einen Beschnitt so aufweist, dass wenigstens ein Bereich (48) von Falten (46) mit verkürzter Faltenlänge gebildet ist, deren Faltenlänge wenigstens bereichsweise am äußeren Umfang (62) und am inneren Umfang (64) des Filterbalgs (30) im Wesentlichen gleich ist.

2. Filterelement nach Anspruch 1, wobei im Bereich (48) von Falten (46) mit verkürzter Faltenlänge die Stirnkanten (36, 38) der Falten (46) in einer ebenen Fläche (42) liegen, vorzugsweise wobei die Stirnkanten (36, 38) der Falten (46) mit verkürzter Faltenlänge in einer von der Stirnkantenfläche (40) ausgehenden Ausnehmung (44) mit ebenem Boden im Filterbalg (30) liegen.

3. Filterelement nach Anspruch 1 oder 2, wobei im Bereich (48) von Falten mit verkürzter Faltenlänge die Stirnkanten (36, 38) der Falten (46) in einer gekrümmten Fläche (43) liegen, vorzugsweise wobei die Stirnkanten (36, 38) der Falten (46) mit verkürzter Faltenlänge in einer von der Stirnkantenfläche (40) ausgehenden konkaven Ausnehmung (44) im Filterbalg (30) liegen.

4. Filterelement nach einem der vorhergehenden Ansprüche, wobei im Filterbalg (30) alternierend Ausnehmungen (44) mit Falten (46) mit verkürzter Faltenlänge und Falten (46) mit unverkürzter Faltenlänge aufeinander folgen.

5. Filterelement nach einem der vorhergehenden Ansprüche, wobei im Filterbalg (30) eine einzige Ausnehmung (44) mit Falten (46) mit verkürzter Faltenlänge innerhalb des Mediums (20) angeordnet ist.

6. Filterelement nach einem der vorhergehenden Ansprüche, wobei der Filterbalg (30) einen ringförmigen Querschnitt aufweist.

7. Filterelement nach einem der vorhergehenden Ansprüche, wobei der Filterbalg (30) einen ovalen Querschnitt aufweist.

8. Filtersystem (100) mit einem Gehäuse (102) mit einem Einlass (108) und einem Auslass (110) für ein Fluid, insbesondere einer Brennkraftmaschine, insbesondere eines Kraftfahrzeugs, und mit einem ersten und einem zweiten Gehäuseteil (104, 106),
wobei in dem Gehäuse (102) ein Filterelement (10) angeordnet ist, insbesondere nach einem der vorhergehenden Ansprüche, mit einem Filterbalg (30) aus einem Filtermedium (20), das in dem Filterbalg (30) entlang von Faltkanten (50), insbesondere zickzackförmig, in Falten (46) gelegt ist, die sich jeweils zwischen gegenüberliegenden Stirnkanten (36, 38) des Filterbalges (30) erstrecken,
wobei der Faltenbalg (30) in sich geschlossen um eine Längsachse (70) angeordnet ist und einen Hohlraum einschließt und an seinen beiden Stirnseiten (12, 14) jeweils mit einer Endscheibe (16, 18) abgedichtet ist,
wobei der Filterbalg (30) in wenigstens einer seiner Stirnkantenflächen (40, 41) einen Beschnitt so aufweist, dass wenigstens ein Bereich (48) von Falten (46) mit verkürzter Faltenlänge gebildet ist, deren Faltenlänge wenigstens bereichsweise am äußeren Umfang (62) und am inneren Umfang (64) des Filterbalgs (30) im Wesentlichen gleich ist, und
wobei wenigstens eines der Gehäuseteile (104) wenigstens einen Bereich (120) aufweist, der korrespondierend zu dem Beschnitt des Filterelements (10) ausgebildet ist.

9. Filtersystem nach Anspruch 8, wobei das Filterelement (10) um ein Stützrohr (26) angeordnet ist, welches eine entlang seines Umfangs konstante axiale Erstreckung aufweist, insbesondere welches im Bereich (48) mit verkürzter Faltenlänge unverkürzt ausgebildet ist.

10. Filtersystem nach Anspruch 8 oder 9, wobei der Beschnitt an einem Ende des Filterelements (10) mit geschlossener Endscheibe (16) angeordnet ist.

11. Filtersystem nach einem der Ansprüche 8 bis 10, wobei der Beschnitt an einem Ende des Filterelements (10) mit offener Endscheibe (18) angeordnet ist.

12. Filtersystem nach einem der Ansprüche 8 bis 11, wobei im Gehäuseteil (104), welchem die beschnittene Stirnseite (12) des Filterelements (10) zugewendet ist, wenigstens eine Ausbuchtung (122) an einer Innenseite des Gehäuseteils (104) in wenigstens eine Ausnehmung (44) am Filterelement (10) eingreift.

13. Filtersystem nach einem der Ansprüche 8 bis 12, wobei in einer außenseitigen Vertiefung (120), welche eine korrespondierende innenseitige Ausbuchtung (122) bildet, ein Verschlusselement (130), insbesondere ein Schnapphaken, angeordnet ist, wobei insbesondere das Verschlusselement (130) im geschlossenen Zustand des Gehäuses (102) im Wesentlichen in die Vertiefung (120) eintaucht.

14. Filtersystem nach einem der Ansprüche 8 bis 13, wobei eine Trennebene (124) zwischen erstem und zweitem Gehäuseteil (104, 106) im Wesentlichen auf der axialen Höhe von Ausnehmungen (44) im Filterelement (10) angeordnet ist.

15. Verwendung eines Filtersystems nach einem der Ansprüche 8 bis 14 als Luftfilter oder Flüssigkeitsfilter, insbesondere als Rundfilter einer Brennkraftmaschine.

## Claims

1. Filter element (10) having a round filter bellows (30) made of a filter medium (20) that is placed in the filter bellows (30) along fold edges (50), in particular zigzag-folded, by forming folds (46) extending each between opposing front edges (36, 38) of the filter bellows (30),
wherein the filter bellows (30) is disposed in a self-contained manner around a longitudinal axis (70) and encloses a hollow space and is sealed at both front faces (12, 14) each with an end disc (16, 18), wherein an end disc is designed as an open end disc (18) with a coaxial flow opening,
wherein the filter bellows (30) features a cut-out in at least one of its front edge surfaces (40, 41) in such a way that at least one area (48) is formed by folds (46) with shortened fold length, **characterized in that** the fold length of the folds (46) in the area (48) of folds (46) with shortened fold length is substantially identical, at least in some areas, at the outer circumference (62) and at the inner circumference (64) of the filter bellows (30).

2. Filter element according to claim 1, wherein in the area (48) of folds (46) with shortened fold length the front edges (36, 38) of the folds (46) lie in a plane surface (42), preferably wherein the front edges (36, 38) of the folds (46) with shortened fold length lie in a flat-bottomed recess (44) in the filter bellows (30) extending from the front edge surface (40).

3. Filter element according to claim 1 or 2, wherein in the area (48) of folds with shortened fold length the front edges (36, 38) of the folds (46) lie in a curved surface (43), preferably wherein the front edges (36, 38) of the folds (46) with shortened fold length lie in a concave recess (44) in the filter bellows (30) extending from the front edge surface (40).

4. Filter element according to one of the preceding claims, wherein recesses (44) with folds (46) of shortened fold length and folds (46) of unshortened fold length follow each other alternately in the filter bellows (30).

5. Filter element according to one of the preceding claims, wherein one single recess (44) with folds (46) of shortened fold length is disposed inside the medium (20) in the filter bellows (30).

6. Filter element according to one of the preceding claims, wherein the filter bellows (30) features an annular cross-section.

7. Filter element according to one of the preceding claims, wherein the filter bellows (30) features an oval cross-section.

8. Filter system (100) having a housing (102) with one inlet (108) and one outlet (110) for a fluid, in particular of an internal combustion engine, in particular of a motor vehicle, and having a first and a second housing component (104, 106),
wherein a filter element (10) according to one of the preceding claims is disposed in the housing (102),
wherein at least one of the housing components (104) features at least one area (120) which is designed to correspond to the cut-out of the filter element (10).

9. Filter system according to claim 8, wherein the filter element (10) is disposed around a support tube (26) which features along its circumference a constant axial extension, in particular which is unshortened in the area (48) with shortened fold length.

10. Filter system according to claim 8 or 9, wherein the cut-out is disposed at an end of the filter element (10) with closed end disc (16).

11. Filter system according to one of the claims 8 to 10, wherein the cut-out is disposed at an end of the filter element (10) with open end disc (18).

12. Filter system according to one of the claims 8 to 11, wherein in the housing component (104), to which the cutout front face (12) of the filter element (10) faces, at least one bulge (122) on an interior side of the housing component (104) engages into at least one recess (44) at the filter element (10).

13. Filter system according to one of the claims 8 to 12, wherein a closure member (130), in particular a snap-in hook, is disposed in an indentation (120) on the exterior side, which forms a corresponding bulge (122) on the interior side, wherein, in particular, the closure member (130) penetrates substantially into the indentation (120) when the housing (102) is closed.

14. Filter system according to one of the claims 8 to 13, wherein a parting plane (124) is disposed between the first and second housing component (104, 106) substantially at the axial height of recesses (44) in the filter element (10).

15. Use of a filter system according to one of the claims 8 to 14 as air filter or liquid filter, in particular as round filter of an internal combustion engine.

## Revendications

1. Elément filtrant (10) ayant un soufflet de filtre (30) rond constitué d'un milieu filtrant (20) placé dans le soufflet de filtre (30) le long d'arêtes de pliage (50), notamment plié en accordéon, en formant des plis (46) qui s'étendent respectivement entre des arêtes frontales (36, 38) opposées du soufflet de filtre (30),
le soufflet de filtre (30) étant disposé en étant fermé sur lui-même autour d'un axe longitudinal (70) et enfermant un espace creux et étant rendu étanche sur ses deux faces frontales (12, 14) respectivement par un disque d'extrémité (16, 18), un disque d'extrémité étant conçu en tant que disque d'extrémité (18) avec une ouverture d'écoulement coaxiale,
le soufflet de filtre (30) présentant dans au moins l'une de ses surfaces d'arête frontale (40, 41) une découpe telle qu'au moins une zone (48) de plis (46) avec une longueur de plis raccourcie est formée, **caractérisé en ce que** la longueur de plis des plis (46) dans la zone (48) des plis (46) avec une longueur de plis raccourcie est sensiblement égale, au moins dans certaines sections, sur la circonférence extérieure (62) et la circonférence intérieure (64) du soufflet de filtre (30).

2. Élément filtrant selon la revendication 1, les arêtes frontales (36, 38) des plis (46) se trouvant dans une surface plane (42) dans la zone (48) de plis (46) avec une longueur de plis raccourcie, de préférence les arêtes frontales (36, 38) des plis (46) avec une longueur de plis raccourcie se trouvant dans un évidement (44) à fond plat dans le soufflet de filtre (30) partant de la surface d'arête frontale (40).

3. Élément filtrant selon la revendication 1 ou 2, les arêtes frontales (36, 38) des plis (46) se trouvant dans une surface bombée (43) dans la zone (48) de plis avec une longueur de plis raccourcie, de préférence les arêtes frontales (36, 38) des plis (46) avec une longueur de plis raccourcie se trouvant dans un évidement (44) concave dans le soufflet de filtre (30) partant de la surface d'arête frontale (40).

4. Élément filtrant selon l'une quelconque des revendications précédentes, des évidements (44) avec plis (46) d'une longueur de plis raccourcie et avec plis (46) d'une longueur de pli non raccourcie se succédant en alternance dans le soufflet de filtre (30).

5. Élément filtrant selon l'une quelconque des revendications précédentes, un seul évidement (44) avec plis (46) d'une longueur de plis raccourcie étant disposé dans le soufflet de filtre (30) à l'intérieur du médium (20).

6. Élément filtrant selon l'une quelconque des revendications précédentes, le soufflet de filtre (30) présentant une section annulaire.

7. Élément filtrant selon l'une quelconque des revendications précédentes, le soufflet de filtre (30) présentant une section ovale.

8. Système de filtre (100) ayant un boîtier (102) avec une entrée (108) et une sortie (110) pour un fluide, notamment d'un moteur à combustion interne, notamment d'un véhicule automobile, et ayant un premier et un second composant de boîtier (104, 106),
un élément filtrant (10) étant disposé dans le boîtier (102) selon l'une quelconque des revendications précédentes,
au moins l'un des composants de boîtier (104) présentant au moins une zone (120) qui est conçue de manière à correspondre à la découpe de l'élément filtrant (10).

9. Système de filtre selon la revendication 8, l'élément filtrant (10) étant disposé autour d'un tube de support (26) qui présente une extension axiale constante le long de sa circonférence, notamment qui est conçu non raccourcie dans la zone (48) avec une longueur de plis raccourcie.

10. Système de filtre selon la revendication 8 ou 9, la découpe étant disposée à une extrémité de l'élément filtrant (10) avec un disque d'extrémité fermé (16).

11. Système de filtre selon l'une quelconque des revendications 8 à 10, la découpe étant disposée à une extrémité de l'élément filtrant (10) avec un disque d'extrémité ouvert (18).

12. Système de filtre selon l'une quelconque des revendications 8 à 11, dans le composant de boîtier (104), vers lequel est tourné la face frontale découpée (12) de l'élément filtrant (10), au moins un renflement (122) sur une face intérieure du composant de boîtier (104) s'engageant dans au moins un évidement (44) sur l'élément filtrant (10).

13. Système de filtre selon l'une quelconque des revendications 8 à 12, un élément de fermeture (130), notamment un crochet d'encliquetage, étant disposé dans un creux (120) côté extérieur qui forme un renflement correspondant (122) côté intérieur, notamment l'élément de fermeture (130) s'enfonçant sensiblement dans le creux (120) lorsque le boîtier (102) est fermé.

14. Système de filtre selon l'une quelconque des revendications 8 à 13, un plan de séparation (124) étant disposé entre le premier et le second composant de boîtier (104, 106) sensiblement à la hauteur axiale des évidements (44) dans l'élément filtrant (10).

15. Utilisation d'un système de filtre selon l'une quelconque des revendications 8 à 14 en tant que filtre à air ou filtre à liquide, notamment en tant que filtre rond d'un moteur à combustion interne.
